# EUROPÄISCHE PATENTSCHRIFT

(11) **EP 2 024 202 B1**
(45) Veröffentlichungstag und Bekanntmachung des Hinweises auf die Patenterteilung: **23.12.2009**
(21) Anmeldenummer: 07725078.5
(22) Anmeldetag: 10.05.2007
(51) Int. Cl.: B60R 21/233

(54) **GASSACK-EINHEIT**
AIRBAG UNIT
UNITE DE SAC DE GAZ

(30) Priorität: 18.05.2006 DE 102006023271
(43) Veröffentlichungstag der Anmeldung: 18.02.2009
(73) Patentinhaber: Autoliv Development AB, 447 83 Vargarda (SE)
(72) Erfinder: BÖRJESSON, Gustav, S-441 35 Alingsas (SE); JACOBSSON, Börje, S-507 31 Brämhult (SE)
(74) Vertreter: Schön, Thilo
(86) Internationale Anmeldenummer: PCT/EP2007/004158
(87) Internationale Veröffentlichungsnummer: WO 2007/134729

(56) Entgegenhaltungen:
- EP-A- 1 340 656
- EP-A- 1 433 667
- WO-A-2006/049101
- WO-A-2006/131351
- US-A1- 2005 062 266
- ANONYMOUS: "Side air bag system" RESEARCH DISCLOSURE, MASON PUBLICATIONS, HAMPSHIRE, GB, Bd. 439, Nr. 14, November 2000 (2000-11), XP007127055 ISSN: 0374-4353

## Beschreibung

### Technisches Gebiet der Erfindung

Die Erfindung betrifft eine Gassack-Einheit nach dem Oberbegriff des Anspruchs 1.

### Stand der Technik

Eine gattungsgemäße Gassack-Einheit ist aus der WO 2006/049 101 bekannt. In EP 1 433 667 wird vorgeschlagen, den von einer Gassackhülle umschlossenen Gasraum durch eine Trennnaht in eine Thorax- und eine Beckenkammer zu unterteilen. Ein Gasgenerator, welcher zwei Ausströmbereiche aufweisen kann, ist im Übergangsbereich zwischen diesen Kammern angeordnet und befüllt diese bei Betätigung. Um zu verhindern, dass nach Abschluss des Füllvorgangs Gas von der Becken- in die Thoraxkammer strömt, ist ein aus Gewebe bestehender Schlauch mittels der Naht, welche die beiden Kammern voneinander trennt, ins Innere des Gassackes eingenäht und ragt in die Beckenkammer. In diesem Rohr befindet sich auch wenigstens ein Ausströmbereich des Gasgenerators. Wenn nach Abschluss des Füllvorgangs von außen Druck auf die Beckenkammer ausgeübt wird, wird der flexible Schlauch von diesem Druck zusammengedrückt, wodurch Gasfluss von der Beckenkammer in die Thoraxkammer verhindert wird.

Nachteilig an diesem Stand der Technik ist, dass eine Trennnaht zwischen den beiden Schutzkammem vorgesehen werden muss. An der Stelle, an der sich die Trennnaht befindet, weist der Gassack jedoch keine Dicke und somit auch nahezu keine Schutzwirkung auf.

### Gegenstand der Erfindung

Hiervon ausgehend stellt sich die vorliegende Erfindung die Aufgabe, die Schutzwirkung einer gattungsgemäßen Gassack-Einheit zu verbessern.

Diese Aufgabe wird durch eine Gassack-Einheit mit den Merkmalen des Anspruchs 1 gelöst.

Die Trennung der beiden Kammern erfolgt durch eine Trennwand, welche mit der Gassackhülle verbunden, beispielsweise vernäht ist. Hierdurch haben die beiden Seitenwände der Gassackhülle auch im Bereich der Trennung der beiden Kammern einen gewissen Abstand voneinander, so dass die Schutzwirkung hier nicht absinkt. Die Trennwand weist einen Durchlass auf, durch den sich die Gasgenerator-Einheit derart streckt, dass sich ein Ausströmbereich der Gasgenerator-Einheit in der einen und der andere Ausströmbereich in der anderen Kammer befindet. Von der Trennwand erstreckt sich ein flexibler Lappen in eine der beiden Kammern, nämlich in diejenige, in der ein höherer Druck herrschen soll. Übersteigt der Druck in dieser Kammer nach Abschluss des Füllvorgangs den Druck in der anderen Kammer, so wird dieser flexible Lappen auf die Mantelfläche des durchtretenden Gasgenerators gedrückt und dichtet somit die eine Kammer gegen die andere Kammer ab.

In einer bevorzugten Ausführungsform nach Anspruch 2 ist der Durchlass in der Trennwand als Durchbrechung oder Loch in der Trennwand ausgebildet und der flexible Lappen ist zumindest abschnittsweise als ringförmige Tülle ausgebildet. Dies sorgt mit einfachen Mitteln für eine gute Gasdichtigkeit.

In einer weiter bevorzugten Ausführungsform weist die Gassackhülle eine Eintrittsöffnung für die Gasgenerator-Einheit auf. Dieser Eintrittsbereich kann nach demselben Prinzip abgedichtet werden, wobei weiter vorzugsweise für die Abdichtung zwischen den beiden Kammern und die Abdichtung nach außen ein einziges Bauteil verwendet werden kann.

Weitere bevorzugte Ausführungsbeispiele ergeben sich aus den weiteren Unteransprüchen sowie aus den nun mit Bezug auf die Figuren näher dargestellten Ausführungsbeispielen. Hierbei zeigen:

### Kurzbeschreibung der Zeichnungen

- Figur 1: Einen Längsschnitt durch eine Seitengassack-Einheit,
- Figur 1a: einen Schnitt durch die Gassackeinheit aus Figur 1 entlang der Ebe- ne A-A,
- Figur 2: das Detail X aus der Figur 1 in einer perspektivischen Darstellung,
- Figur 3: das in Figur 2 Gezeigte nach Abschluss des Füllvorgangs,
- Figur 4: eine zweite Ausführungsform einer Seitengassack-Einheit in einem Längsschnitt,
- Figur 5: einen Schnitt entlang der Ebene B-B aus Figur 4,
- Figur 6: einen Schnitt entlang der Ebene C-C aus Figur 4,
- Figur 7: eine alternative Ausführungsform in einer der Figur 5 entsprechen- den Darstellung,
- Figur 8: ein drittes Ausführungsbeispiel einer Seitengassack-Einheit und
- Figur 9: einen Schnitt entlang der Ebene D-D aus Figur 8.

### Beschreibung bevorzugter Ausführungsformen

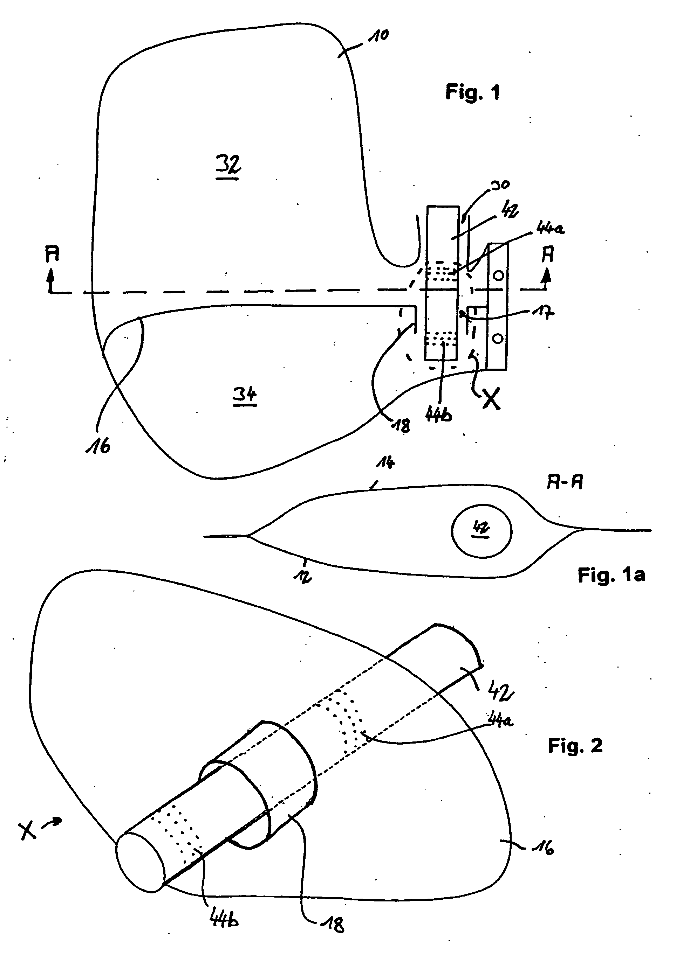

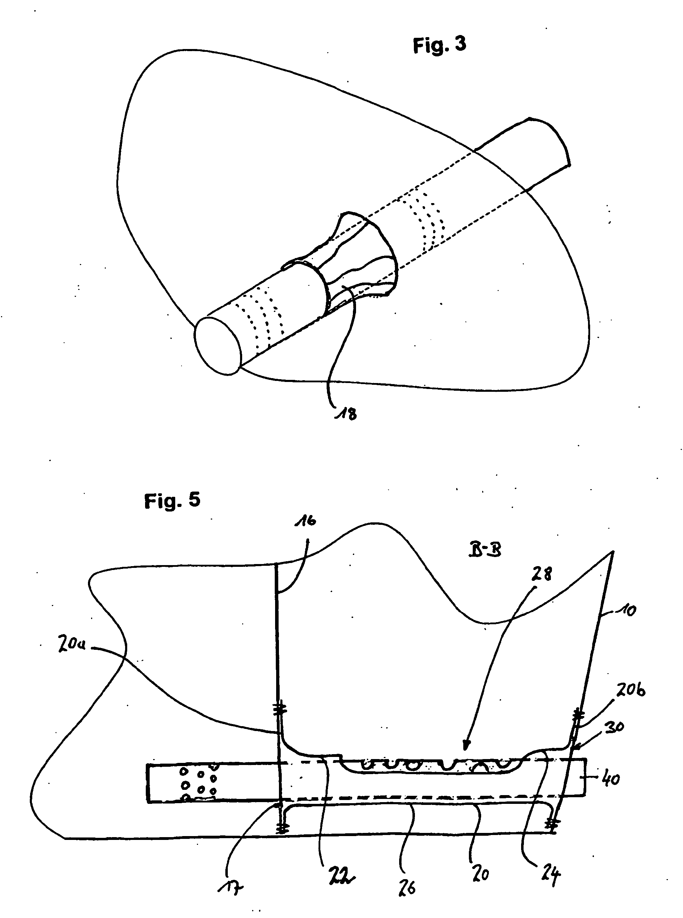

Die Figuren 1, 1a, 2 und 3 zeigen ein erstes Ausführungsbeispiel einer Seitengassack-Einheit. Hierbei ist die Figur 1 ein Längsschnitt, die Figur 2 ein Schnitt entlang der Schnittebene A-A aus Figur 1, Figur 2 zeigt den Durchtrittsbereich eines Gasgenerators durch eine Trennwand und Figur 3 zeigt das in Figur 2 Gezeigte nach Abschluss des Füllvorganges.

Die Seitengassack-Einheit besteht aus einem Gassack 10 und einem Gasgenerator 42. Die Hülle des Gassacks 10 ist aus zwei Seitenwänden 12 und 14 entlang des Umfanges zusammengenäht, wobei jedoch auch andere Verbindungsarten möglich sind. Durch die Eintrittsöffnung 30 tritt der Gasgenerator 42 ins Innere der Gassackhülle 10, welche durch die Trennwand 16 in eine Thoraxkammer 32 und eine Beckenkammer 34 unterteilt ist. Um beide Kammern füllen zu können, sind in der Mantelfläche des Gasgenerators 42 zwei Ausströmbereiche 44a und 44b angeordnet, wobei sich der erste Ausströmbereich 44a in der Thoraxkammer 32 und der zweite Ausströmbereich 44b in der Beckenkammer 34 befindet. Der Gasgenerator 42 erstreckt sich von der Eintrittsöffnung 30 zunächst in die Thoraxkammer 32 und von hier durch die Durchbrechung 17 in der Trennwand 16 in die Beckenkammer 34. Im Bereich der Eintrittsöffnung 30 kann die Gassackhülle 10 mittels einer Schelle auf die Mantelfläche des Gasgenerators 42 gequetscht sein (nicht dargestellt).

Es soll erreicht werden, dass nach Abschluss des Füllvorganges in der Beckenkammer 34 ein höherer Druck als in der Thoraxkammer 32 erreicht und auch aufrechterhalten wird. Hierzu erstreckt sich vom Umfang der Durchbrechung 17 ein mit der Trennwand 16 verbundener flexibler Lappen in Form einer Tülle 18 in die Beckenkammer 34, wie dies insbesondere auch gut anhand der Figur 2 zu sehen ist. Die Tülle 18 kann hierbei einstückig mit der Trennwand 16 gewoben oder als separates Gewebeelement mit der Trennwand 16 verbunden sein. Die Tülle ist direkt ausschließlich mit der Trennwand, nicht mit der Gassackhülle verbunden.

Übersteigt der Druck in der Beckenkammer 34 den Druck in der Thoraxkammer 32, so wird die Tülle 18 auf die Mantelfläche des Gasgenerators 42 gedrückt und somit die Beckenkammer 34 gegen die Thoraxkammer 32 abgedichtet. Der unterschiedliche Druck in den beiden Kammern kann beispielsweise dadurch erzeugt werden, dass aus den beiden Ausströmbereichen 44a, 44b die gleiche Menge Gas ausströmt, die Beckenkammer 34 jedoch ein geringeres Volumen als die Thoraxkammer 32 aufweist. Da die Tülle 18 nur mit der Trennwand 16, nicht jedoch mit den Seitenwänden 12 und 14 verbunden ist, bleibt die gewünschte Dicke des Gassacks auch dann erhalten, wenn die Tülle 18 den Gasfluss wie gewünscht unterbindet.

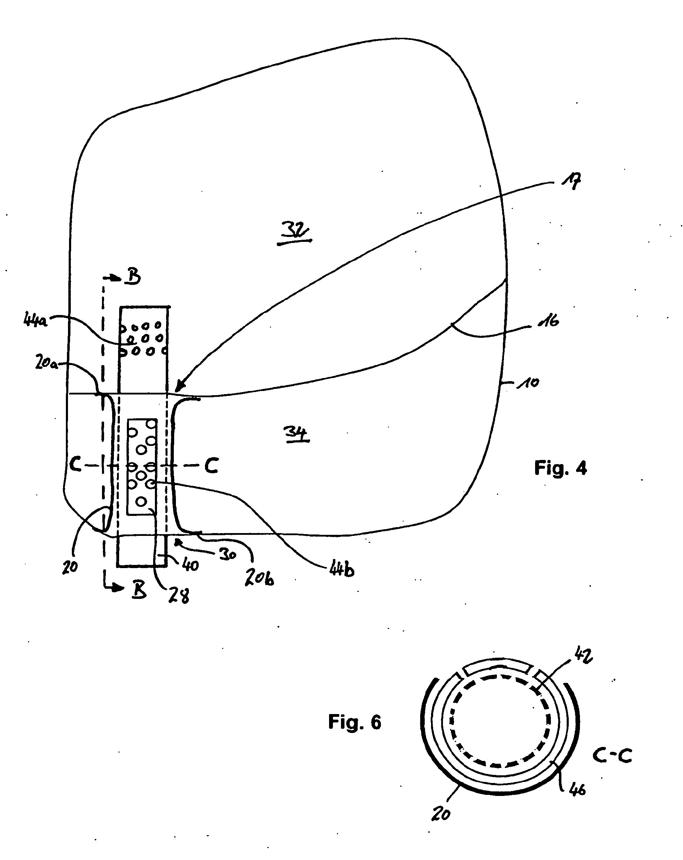

Die Figuren 4, 5 und 6 zeigen ein zweites Ausführungsbeispiel einer Seitengassack-Einheit im Längsschnitt. Auch hier ist die Gassackhülle 10 aus zwei Seitenwänden, welche über ihren Umfang miteinander verbunden sind, zusammengesetzt (nicht näher dargestellt). Die Gasgenerator-Einheit 40 tritt durch die Eintrittsöffnung 30 in die Gassackhülle 10 hinein. Auch hier ist innerhalb der Gassackhülle 10 eine Trennwand 16 angeordnet, welche mit den beiden Seitenwänden verbunden ist. Im Gegensatz zum ersten Ausführungsbeispiel schließt sich an die Eintrittsöffnung 30 zunächst die Beckenkammer 34 an, die Thoraxkammer 32 liegt jenseits der Trennwand 16. Die Gasgenerator-Einheit 30, welche in diesem Ausführungsbeispiel aus einem Gasgenerator 42 und einem Deflektor 46 besteht, erstreckt sich durch die Eintrittsöffnung 30 und durch eine Durchbrechung 17 in der Trennwand 16, so dass ein Abschnitt der Gasgenerator-Einheit 40 in der Thoraxkammer 32 und ein anderer Abschnitt der Gasgenerator-Einheit 40 in der Beckenkammer 34 liegt. In beiden Abschnitten ist ein Ausströmbereich 44a, 44b vorgesehen.

Auch hier soll erreicht werden, dass in der Beckenkammer 34 ein höherer Druck als in der Thoraxkammer 32 aufgebaut und aufrechterhalten wird. Hierzu dient das Gewebeelement 20, welches weiterhin dazu dient, die Beckenkammer 34 nach außen hin abzudichten. Das Gewebeelement 20 hat die Form eines Rohres mit zwei Flanschen 20a, 20b. Der vordere Flansch 20a ist mit der Trennwand 16 vernäht, der hintere Flansch 20b kann mit dem Abschnitt der Gassackhülle, welche die Eintrittsöffnung 30 umgibt, ebenfalls vernäht sein. In dem Bereich, in dem der zweite Ausströmbereich 44b des Gasgenerators 42 zu liegen kommt, weist das rohrförmige Gewebeelement 20 eine Längsnut 28 auf. Das Gewebeelement 20 hat einen vorderen Abschnitt 22 und einen hinteren Abschnitt 24, welche jeweils rohrförmig sind und in den Flanschen 20a,b auslaufen. Der vordere, rohrförmige Abschnitt bildet den flexiblen Lappen, der bei Betätigung der Gasgeneratoreinheit auf deren Mantelfläche gedrückt wird. Der Flansch 20a des vorderen Abschnitts 22 liegt an der Trennwand 16 und der Flansch des hinteren Abschnitts 24 liegt an der Gassackhülle an. Es ist in der Regel zu bevorzugen, die Flansche zumindest stellenweise mit der Trennwand 16 bzw. mit der Gassackhülle 10 zu vernähen.

Wie man insbesondere anhand Figur 6 sieht, weist die hier verwendete Gasgenerator-Einheit 40 neben dem Gasgenerator 42 einen Deflektor 46 auf, welcher zumindest im zweiten Ausströmbereich 44b lediglich eine gerichtete radiale Ausströmung zulässt. Hierdurch tritt das Gas durch die Längsnut im Gewebeelement 20 in die Beckenkammer 34 ein und drückt den vorderen Abschnitt 22 und dem hinteren Abschnitt 24 auf die Mantelfläche der Gasgenerator-Einheit. Rein funktional könnten vorderer Abschnitt und hinterer Abschnitt des Gewebeelementes 20 auch voneinander getrennt sein, die hier dargestellte Ausführungsform, in dem das Gewebeelement 22 einstückig ausgebildet und vorderer Abschnitt 22 und hinterer Abschnitt 24 über dem mittleren Abschnitt 26 miteinander verbunden sind, erleichtert jedoch die Montage der Gasgenerator-Einheit 40.

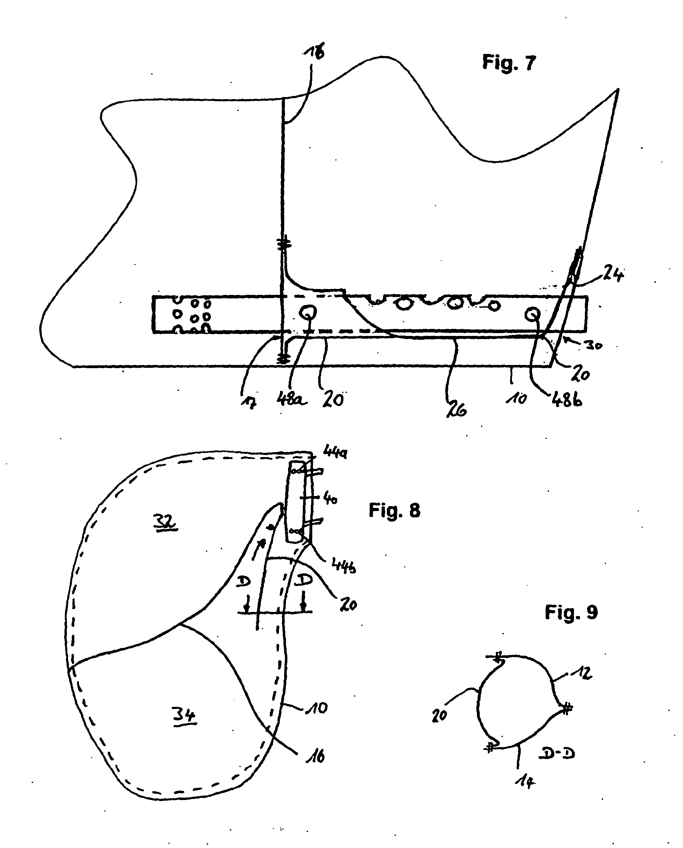

Die Figur 7 zeigt eine Alternative zum eben beschriebenen Ausführungsbeispiel in einer der Figur 5 entsprechenden Darstellung. Hier ist lediglich der vordere Abschnitt 22 des Gewebeelementes 20 als rohrförmige Tülle ausgebildet, während mittlerer Abschnitt 26 und hinterer Abschnitt 24 ein flacher Lappen ist. Hierbei erstreckt sich der mittlere Abschnitt 26 im wesentlichen auf der Unterseite der Gasgenerator-Einheit 40 und der hintere Abschnitt 24 steht im wesentlichen senkrecht zur Gasgenerator-Einheit und weist ein Loch auf, durch das die Gasgenerator-Einheit tritt. Das Loch hat einen Durchmesser, der etwa so groß ist wie der Außendurchmesser des Gasgenerators. Der Abschnitt 24 wird hierdurch durch den Gasgenerator festgelegt und braucht nicht durch eine Naht mit der Gassackhülle verbunden zu sein. Übersteigt der Druck in der Beckenkammer 34 den Atmosphärendruck, so wird der lappenartige hintere Abschnitt 24 auf die Mantelfläche der Gasgenerator-Einheit 40 und auf die Gassackhülle 10 gedrückt.

In der Figur 7 sind auch Stehbolzen 48a und 48b dargestellt, welche sich senkrecht zur Zeichenebene erstrecken und der Befestigung der Gasgeneratoreinheit 40 und somit der gesamten Gassackeinheit - beispielsweise an einem Sitzrahmen - dienen. Die Gassackhülle 10 weist entsprechende Löcher auf, durch die jeweils ein Stehbolzen 48a,48b tritt. Der vordere Stehbolzen 48a tritt auch durch das Gewebeelement 20, welches hierfür ein weiteres Loch aufweist. Hierdurch wird die Position des Gewebeelementes bezüglich der Gasgeneratoreinheit 40 festgelegt. Somit dient der vordere Stehbolzen 48a auch der Positionierung des Gewebeelementes 20 innerhalb der Gassackhülle 10.

Die Figuren 8 und 9 zeigen ein weiteres Ausführungsbeispiel. Hier ist der zwei Ausströmbereiche 44a, 44b aufweisende Gasgenerator 40 an einem oberen Ende der Gassackhülle 10 in dieser angeordnet. Das Gewebeelement 20, welches zur Abdichtung der Beckenkammer 34 gegenüber der Thoraxkammer 32 dient, hat hier weiterhin eine gasleitende Funktion und bildet gemeinsam mit den Seitenwänden 12,14 der Gassackhülle 10 ein Gasleitrohr. Die Abdichtung erfolgt auch hier dadurch, dass ein den flexiblen Lappen bildender oberer Abschnitt 20a des Gewebeelementes 20, welcher mit der Trennwand 16 verbunden ist, nach Füllung der Beckenkammer 34 auf die Mantelfläche des Gasgenerators 42 gedrückt wird.

In den Fällen, in denen kein Deflektor notwndig ist, bildet der Gasgenerator alleine die Gasgeneratoreinheit.

### Bezugszeichenliste

- 10: Gassackhülle
- 12: erste Seitenwand
- 14: zweite Seitenwand
- 16: Trennwand
- 17: Durchbrechung
- 18: Tülle
- 20: Gewebeelement
- 20a,b: Flansch
- 22: vordere Abschnitt
- 24: hintere Abschnitt
- 26: mittlerer Abschnitt
- 28: Längsnut
- 30: Eintrittsöffnung
- 32: Thoraxkammer
- 34: Beckenkammer
- 40: Gasgeneratoreinheit
- 42: Gasgenerator
- 44a,b: Ausströmbereich
- 46: Deflektor
- 48a,48b: Stehbolzen

## Patentansprüche

1. Gassack-Einheit mit einer Gassackhülle (10), einer im wesentlichen zylindrischen Gasgeneratoreinheit (40,42) mit zwei Ausströmbereichen (44a,44b), welche sich innerhalb der Gassackhülle (10) befinden, und einer mit der Gassackhülle (10) verbundenen, zwei Kammern voneinander trennenden Trennung mit einem Durchlass, durch den sich die Gasgeneratoreinheit (40,42) derart erstreckt, dass sich in jeder Kammer ein Ausströmbereich (44a,44b) befindet.
wobei die Trennung als Trennwand (16) ausgebildet ist, **dadurch gekennzeichnet, dass** sich im Bereich des Durchlasses von der Trennwand ein flexibler Lappen in die erste Kammer erstreckt, welcher bei Betätigung des Gasgenerators der Gasgeneratoreinheit auf die Mantelfläche der Gasgeneratoreinheit gedrückt wird.

2. Gassack-Einheit nach Anspruch 1, **dadurch gekennzeichnet, dass** der Durchlass als Durchbrechung (17) in der Trennwand (16) ausgebildet und der flexible Lappen als sich um die Durchbrechung erstreckende, zumindest abschnittsweise ringförmig ausgebildete Tülle (18) ausgebildet ist.

3. Gassack-Einheit nach Anspruch 1 oder Anspruch 2, **dadurch gekennzeichnet, dass** die Gassackhülle eine Eintrittsöffnung (30) für die Gasgeneratoreinheit (40,42) aufweist und dass im Bereich dieser Eintrittsöffnung ein zweiter flexibler Lappen auf der Innenseite der Gassackhülle angeordnet ist, welcher bei Betätigung der Gasgeneratoreinheit auf die Mantelfläche der Gasgeneratoreinheit gedrückt wird.

4. Gassack-Einheit nach Anspruch 2 und Anspruch 3, **dadurch gekennzeichnet, dass** erster und zweiter Lappen miteinander verbunden sind.

5. Gassack-Einheit nach einem der vorangehenden Ansprüche, **dadurch gekennzeichnet, dass** zumindest der erste Lappen nicht unmittelbar mit der Gassackhülle verbunden ist.

6. Gassack-Einheit nach einem der vorangehenden Ansprüche, **dadurch gekennzeichnet, dass** der Gassack ein Seitengassack, die erste Kammer eine Beckenkammer und die zweite Kammer eine Thoraxkammer ist.

7. Gassack-Einheit nach einem der vorangehenden Ansprüche, **dadurch gekennzeichnet, dass** die Gasgeneratoreinheit (40) aus einem Gasgenerator (42), dessen Ausströmöffnungen schubneutral angeordnet sind, und einem den Gasgenerator zumindest abschnittsweise umgebenden Deflektor (46) besteht.

8. Gassack-Einheit nach einem der vorangehenden Ansprüche, **dadurch gekennzeichnet, dass** die Position des Gewebeelements (20) bezüglich der Gasgeneratoreinheit (40) festgelegt ist.

9. Gassack-Einheit nach Anspruch 8, **dadurch gekennzeichnet, dass** die Festlegung durch einen Stehbolzen (48a) der Gasgeneratoreinheit (40) erfolgt.

## Claims

1. Airbag unit comprising an airbag skin (10), an essentially cylindrical gas generator unit (40,42) having two outlet sections (44a,44b) being located inside the airbag skin (10), and a separation being connected to the airbag skin (10) and separating two chambers from each other, said separation having a passage through which the gas generator unit (40, 42) extends in a way that one outlet section (44a,44b) is located in each chamber, with the separation being formed as a separation wall (16),
**characterised in that** in the area of the passage a flexible cloth extends from the separation wall into the first chamber, said cloth being pressed onto the lateral area of the gas generator unit if the gas generator of the gas generator unit is actuated.

2. Airbag unit according to claim 1, **characterised in that** the passage is formed as an opening (17) in the separation wall (16) and that the flexible cloth is formed as an at least partially annular spout (18) extending around the opening.

3. Airbag unit according to claim 1 or claim 2, **characterised in that** the airbag skin shows an inlet opening (30) for the gas generator unit (40,42) and that in the area of this inlet opening a second flexible cloth is located on the inside of the airbag skin, said second cloth being pressed on the lateral area of the gas generator unit if the airbag is actuated.

4. Airbag unit according to claim 2 and claim 3, **characterised in that** the first and the second cloths are connected to each other.

5. Airbag unit according to one of the preceding claims, **characterised in that** at least the first cloth is not directly connected to the airbag skin.

6. Airbag unit according to one of the preceding claims, **characterised in that** the airbag is a side airbag, the first chamber is a pelvis chamber and the second chamber is a thorax chamber.

7. Airbag unit according to one of the preceding claims, **characterised in that** the gas generator unit (40) is comprised of a gas generator (42) whose outlet openings are arranged in a thrust neutral manner and of a deflector (46) surrounding said gas generator at least in sections.

8. Airbag unit according to one of the preceding claims, **characterised in that** the position of the fabric element (20) is fixed relative to the gas generator unit (40).

9. Airbag unit according to claim 8, **characterised in that** the fixation is carried out by bolts (4ba) of the gas generator unit (40).

## Revendications

1. Unité de sac de gaz avec une enveloppe de sac de gaz (10), une unité de générateur de gaz (40, 42) essentiellement cylindrique avec deux zones d'échappement (44a, 44b), qui se trouvent à l'intérieur de l'enveloppe de sac de gaz (10), et avec une cloison reliée à l'enveloppe de sac de gaz (10) et séparant deux chambres l'une de l'autre avec un passage, à travers lequel s'étend la unité de générateur de gaz (40, 42) de telle sorte qu'une zone d'échappement (44a, 44b) se trouve dans chaque chambre, la cloison étant réalisée sous forme de paroi de séparation (16), **caractérisée en ce qu'**au niveau du passage de la paroi de séparation, une patte flexible, qui est pressée sur la surface de l'enveloppe de l'unité de générateur de gaz lors de l'actionnement du générateur de gaz de la unité de générateur de gaz, s'étend dans la première chambre.

2. Unité de sac de gaz selon la revendication 1, **caractérisée en ce que** le passage est réalisé sous forme de traversée (17) dans la paroi de séparation (16) et la patte flexible est réalisée sous forme de douille (18) s'étendant autour de la traversée et réalisée au moins par secteurs de manière annulaire.

3. Unité de sac de gaz selon la revendication 1 ou 2, **caractérisée en ce que** l'enveloppe de sac de gaz présente un orifice d'entrée (30) pour l'unité de générateur de gaz (40, 42) et **en ce qu'**au niveau de cet orifice d'entrée, une deuxième patte flexible, qui est pressée sur la surface de l'enveloppe de l'unité de générateur de gaz lors de l'actionnement du générateur de gaz, est agencée sur la face intérieure de l'enveloppe de sac de gaz.

4. Unité de sac de gaz selon les revendications 2 et 3, **caractérisée en ce que** la première et la deuxième patte sont reliées l'une à l'autre.

5. Unité de sac de gaz selon l'une quelconque des revendications précédentes, **caractérisée en ce qu'**au moins la première patte n'est pas reliée directement à l'enveloppe de sac de gaz.

6. Unité de sac de gaz selon l'une quelconque des revendications précédentes, **caractérisée en ce que** le sac de gaz est un sac de gaz latéral, la première chambre est une chambre pour bassin et la deuxième chambre une chambre pour thorax.

7. Unité de sac de gaz selon l'une quelconque des revendications précédentes, **caractérisée en ce que** l'unité de générateur de gaz (40) se compose d'un générateur de gaz (42) dont les orifices d'échappement sont agencées de manière indépendante de la poussée, et d'un déflecteur (46) entourant le générateur de gaz au moins par secteurs.

8. Unité de sac de gaz selon l'une quelconque des revendications précédentes, **caractérisée en ce que** la position de l'élément en tissu (20) est fixée par rapport à l'unité de générateur de gaz (40).

9. Unité de sac de gaz selon la revendication 8, **caractérisée en ce que** la fixation se fait par un goujon (48a) de l'unité de générateur de gaz (40).
